Europäisches Patentamt

European Patent Office

Office européen des brevets

(11) Numéro de publication: **0 070 791**
**A1**

# (12) DEMANDE DE BREVET EUROPEEN

(21) Numéro de dépôt: 82630052.7

(22) Date de dépôt: 26.05.82

(51) Int. Cl.³: **C 21 C 5/48,** C 21 C 5/50, F 16 L 39/04

(30) Priorité: 20.07.81 LU 83501

(43) Date de publication de la demande: 26.01.83 Bulletin 83/4

(84) Etats contractants désignés: **AT BE DE FR GB IT NL SE**

(71) Demandeur: **MecanARBED Dommeldange S.à r.l., Boîte Postale 34, L-1050 Dommeldange (LU)**

(72) Inventeur: **Dauphin, Pierre, 3 rue Belle Vue, L-7309 Steinsel (LU)**
Inventeur: **Colling, Joseph, 61 a route de Luxembourg, L-8140 Bridel (LU)**
Inventeur: **Fries, Daniel, 11 rue de l'Europe, B-6700 Arlon (BE)**
Inventeur: **Heintz, Carlo, 2 Square Aloyse Meyer, L-2154 Luxembourg (LU)**
Inventeur: **Mercatoris, Robert, 68 rue Emile Metz, L-2149 Luxembourg (LU)**

(74) Mandataire: **Neyen, René, Administration Centrale de l'Arbed Case postale 1802, L-2930 Luxembourg (LU)**

(54) **Joint tournant à raccords multiples.**

(57) Joint tournant à raccords multiples servant à amener des fluides éventuellement sous pression et chargés de particules solides sur des installations tournant autour d'un axe (AA°) qui comporte un plateau collecteur (3) solidaire de l'installation tournante dont l'axe de rotation coïncide avec celui de l'installation tournante (AA°). Ce plateau (3) est muni de canaux (14, 16, 17) pour le passage de fluides. Des plateaux distributeurs (1,2) fixes comportent des canaux d'amenée de fluides (10, 12). Des rainures (8) circulaires, concentriques à l'axe de ratation (AA°) agencées aux interfaces des plateaux distributeur et collecteur assurent une communication permanente entre les canaux d'entrée (10, 12) et de sortie (14, 16, 17).

Les rainures (8) peuvent être réalisées dans le plateau distributeur ou dans le plateau collecteur.

Joint tournant à raccords multiples.

L'invention concerne un joint tournant à raccords multiples servant à amener des fluides éventuellement sous pression et chargés de particules solides sur des installations tournant autour d'un axe.

L'invention est notamment applicable à l'amenée de lubrifiant, d'eau de refroidissement et de gaz chargés éventuellement de matière solide à des récipients d'affinage de fonte en cornue basculant autour de tourillons latéraux.

Le développement et l'élargissement des possibilités métallurgiques des techniques d'affinage a été accompagné d'un nombre croissant de gaz différents et de matières solides injectés par le fond du creuset. Cette injection de gaz et de matières solides finement pulvérisées dans le bain de métal en fusion peut se faire p. ex. à l'aide de briques poreuses gainées de chemises métalliques, comme décrit dans le brevet LU 81.208 déposé par la demanderesse.

Chaque brique est reliée à un circuit indépendant d'amenée de gaz, lequel circuit comporte une régulation de pression resp. de débit.

Sur les convertisseurs basculants modernes le besoin de fluides de nature et de pression différente devient de plus en plus grand.

La méthode la plus simple pour amener des fluides sous pression sur une installation tournante consiste à introduire des tuyaux souples à travers les tourillons de support creux. Cette méthode est limitée à des installations qui tournent d'un angle relativement faible sinon la torsion des tuyaux conduit à leur destruction. En outre la température élevée et l'environnement corrosif et abrasif rencontrés en sidérurgie réduisent beaucoup l'intérêt de cette méthode.

Une possibilité pour alimenter en fluides un récipient métallurgique basculant a été décrite dans la demande de brevet DE 27 02 287. Mais cette solution ne permet que d'amener un nombre de fluides différents limité sur la partie tournante.

La présente invention a comme but la réalisation d'un joint tournant comportant un nombre de raccords élevé qui évite les désavantages précédemment décrits. Il faut également que le joint tournant soit compacte et démontable en bloc pour les remises en état éventuelles en atelier.

En plus il faut qu'il permette le passage d'eau de refroidissement, de lubrifiants et de fluides non lubrifiants sous pression élevée.

Le joint tournant ne doit imposer aucune contrainte en ce qui concerne la valeur de l'angle de rotation. Par ailleurs il faut que le joint tournant possède une distribution de températures qui soit symétrique par rapport à l'axe de rotation pour obtenir des dilatations symétriques.

Ces buts sont atteints grâce au joint tournant suivant l'invention qui comporte un plateau collecteur solidaire de l'installation tournante dont l'axe de rotation coïncide avec celui de rotation de l'installation tournante, lequel plateau est muni de canaux pour le passage de fluides, au moins un plateau distributeur fixe muni de canaux d'amenée de fluides ainsi que des rainures circulaires concentriques à l'axe de rotation agencées aux interfaces des plateaux distributeur et collecteur et qui assurent une communication permanente entre les canaux d'entrée et de sortie.

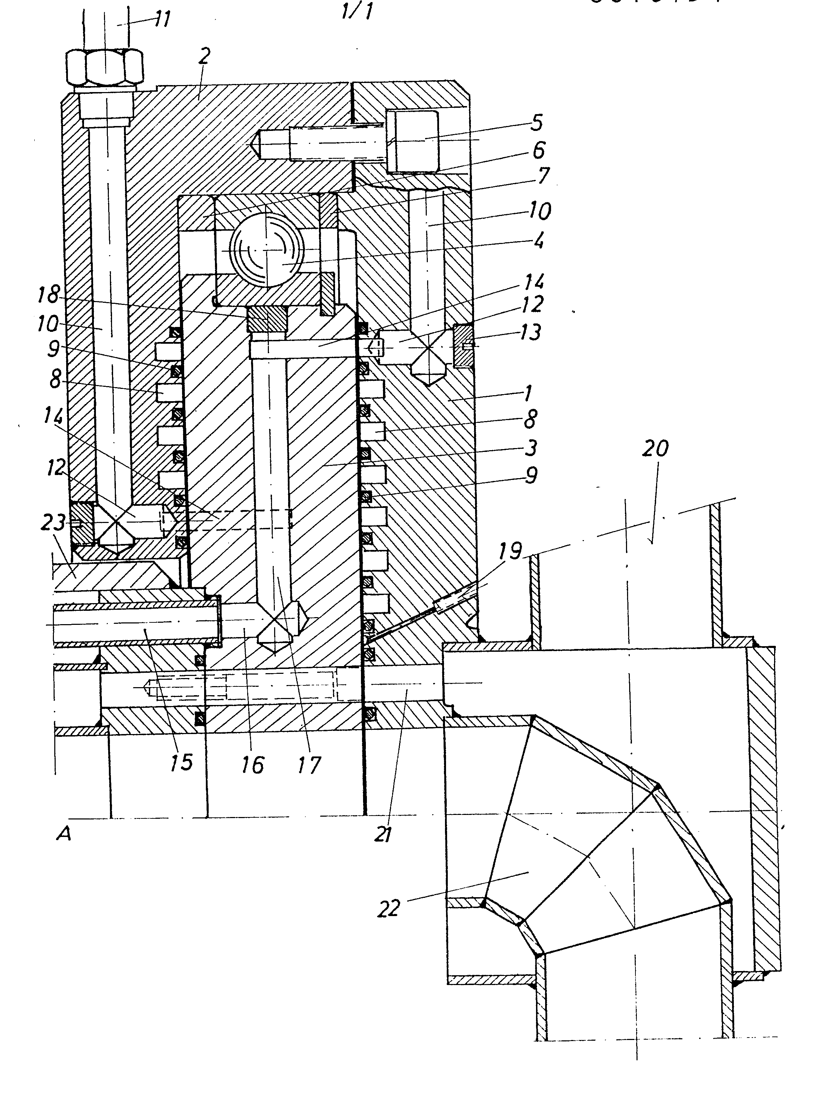

L'invention sera exposée plus en détail à l'aide du dessin qui représente un mode d'exécution possible de l'installation suivant l'invention.

La figure représente partiellement en coupe une moitié du joint tournant à raccords multiples réalisé conformément à l'invention.

Sur la figure est représenté un joint tournant, qui est de révolution autour de l'axe de rotation AA' de l'installation tournante, et qui comporte deux plateaux distributeurs 1,2 qui entourent un plateaux collecteur 3.

Le mouvement du plateau 3, solidaire de l'installation tournante, à l'intérieur des plateaux distributeurs 1 et 2 immobiles est facilité par un roulement 4 ou un palier lisse.

Des vis 5 réparties tout autour du plateau 1 serrent le plateau distributeur 1 contre le plateau distributeur 2; le positionnement du plateau collecteur 3 est ajusté à l'aide des entretoise 6 et 7.

L'entrefer entre le plateau tournant et les plateaux immobiles doit être suffisamment grand pour éviter tout grippage par suite de dilatations provoquées par un gradient de température et suffisamment faible pour exclure tout passage de fluide sous pression entre rainures circulaires 8 voisines dont l'étanchéité est assurée par des joints circulaires 9. Les rainures circulaires 8 sont concentriques à l'axe de rotation.

Chaque rainure 8 est en communication avec un seul canal d'entrée de fluide 10 sur lequel est monté un tuyau 11 d'amenée de fluide sous pression.

Des trous 12 sont percés à partir de la face du plateau distributeur qui n'est pas en contact avec le plateau collecteur et relient les différents canaux 10 aux différentes rainures circulaires 8. L'entrée de ces trous est ensuite fermée par des bouchons 13.

Chaque rainure circulaire 8 communique avec un canal 14. Lorsque le plateau collecteur tourne, l'endroit où le canal 14 communique avec la rainure circulaire se déplace.

0070791

Les canaux 14 sont mis en communication avec les tubes 15 par l'intermédiaire de trous 16,17 dont les seconds sont fermés à l'aide de bouchons 18.

Etant donné que les rainures circulaires sont agencées des deux côtés du plateau distributeur 3 on obtient un joint tournant particulièrement compacte.

Il est évident qu'au lieu de faire les rainures circulaires 8 dans les deux plateaux distributeurs 1,2 on peut les réaliser également dans les deux faces opposées du plateau collecteur 3.

Les tubes 15 qui mènent le fluide sur l'installation basculante sont disposés de préférence sur un cercle, dont le centre se trouve sur l'axe de rotation AA' mais ils peuvent également être disposés sur plusieurs cercles concentriques ou de façon quelconque.

L'eau de refroidissement arrive parle tube 20, passe ensuite dans une multitude de canaux 21 disposés sur un cercle centré sur AA' pour ressortir finalement par le tube 22.

L'eau de refroidissement peut également circuler en sens contraire ou bien entrer par un des tourillons et ressortir par l'autre. Ce qui importe est la disposition symétrique des canaux 21 autour de l'axe de rotation pour obtenir un gradient de températures symétriques autour de l'axe de rotation et par suite une distribution des dilatations symétrique.

La pièce 23 est soudée à une bride qui fixe le joint sur le tourillon creux de manière à permettre son démontage en bloc, de sorte que les remises en état puissent être effectuées en atelier. Des évents 19 servent à repérer des fuites éventuelles et à éviter des interpénétrations des différents circuits.

On peut augmenter facilement le nombre de raccords en augmentant le diamètre des différents plateaux, par contre, lorsqu'on n'utilise qu'un nombre réduit de fluides différents ou que le joint tournant n'a

0070791

pas besoin d'être particulièrement compacte il est possible de n'employer qu'un seul plateau distributeur qui s'appuie contre un plateau collecteur.

Revendications

1. Joint tournant à raccords multiples servant à amener des fluides éventuellement sous pression et chargés de particules solides sur des installations tournant autour d'un axe (AA') caractérisé en ce qu'il comporte un plateau collecteur (3) solidaire de l'installation tournante dont l'axe de rotation coïncide avec celui de l'installation tournante (AA'); lequel plateau est muni de canaux (14,17) pour le passage de fluides, au moins un plateau distributeur (1,2) fixe qui est muni de canaux d'amenée de fluides (10,12) ainsi que des rainures (8) circulaires concentriques à l'axe de rotation (AA') agencées aux interfaces des plataux distributeur et collecteur et qui assurent une communication permanente entre les canaux d'entrée (10,12) et de sortie (14,16,17).

2. Joint tournant selon la revendication 1, dans lequel les rainures (8) sont réalisées dans le/les plateaux distributeurs.

3. Joint tournant selon la revendication 1, dans lequel les rainures (8) sont réalisées dans le plateaux collecteur.

4. Joint tournant selon les revendication 1 à 3, dans lequel les différentes rainures (8) sont isolées les unes des autres à l'aide de joints (9).

5. Joint tournant selon la revendication 1, caractérisé en ce qu'il comporte un plateau collecteur (3) et au moins un plateau distributeur (1 resp. 2).

6. Joint tournant selon les revendications 1,5, caractérisé en ce que le mouvement relatif entre les plateaux fixes et mobiles est réalisé à l'aide de roulement resp. des paliers lisses.

0070791

**Office européen des brevets**

## RAPPORT DE RECHERCHE EUROPEENNE

EP 82 63 0052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 298 757 (CREUSOT-LOIRE) | | C 21 C 5/48<br>C 21 C 5/50<br>F 16 L 39/04 |
| | --- | | |
| A | FR-A-2 473 675 (CREUSOT-LOIRE) | | |
| | --- | | |
| A | US-A-3 893 658 (H.M. FISHER) | | |
| | --- | | |
| A | EP-A-0 007 418 (EISENWERK-GES. MAXIMILIANSHÜTTE) | | |
| | --- | | |
| A | DE-A-1 907 081 (GRAUBREMSE) | | |
| | --- | | |
| A | DE-C- 937 323 (CHIKSAN CO.) | | DOMAINES TECHNIQUES RECHERCHES (Int. Cl. ³) |
| | --- | | |
| A | US-A-3 167 332 (C.F. SIMMERS) | | C 21 C<br>F 16 L |
| | ----- | | |

Le présent rapport de recherche a été établi pour toutes les revendications

| Lieu de la recherche | Date d'achèvement de la recherche | Examinateur |
|---|---|---|
| LA HAYE | 21-09-1982 | SCHROEDER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    & : membre de la même famille, document correspondant

OEB Form 1503. 03.82